(19) **Europäisches Patentamt**
**European Patent Office**
**Office européen des brevets**

(11) **EP 4 708 111 A1**

(12) **EUROPEAN PATENT APPLICATION**
published in accordance with Art. 153(4) EPC

(43) Date of publication:
**11.03.2026 Bulletin 2026/11**

(51) International Patent Classification (IPC):
***G06F 30/20*** (2020.01)

(21) Application number: **24876035.7**

(86) International application number:
**PCT/CN2024/095692**

(22) Date of filing: **28.05.2024**

(87) International publication number:
**WO 2025/077209 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.10.2023 CN 202311329622**

(71) Applicant: **CRRC Changchun Railway Vehicles
Co., Ltd.**
**Changchun, Jilin 130000 (CN)**

(72) Inventors:
• **TAN, Fuxing**
**Changchun, Jilin 130000 (CN)**
• **HU, Hao**
**Changchun, Jilin 130000 (CN)**
• **LI, Kai**
**Changchun, Jilin 130000 (CN)**
• **LIU, Hongtao**
**Changchun, Jilin 130000 (CN)**

(74) Representative: **Lorenz Seidler Gossel Part. mbB
Widenmayerstr. 23
80538 München (DE)**

(54) **SUPERCONDUCTING MAGNET FATIGUE TOPOLOGY OPTIMIZATION METHOD AND RELATED APPARATUS**

(57) The present application provides a superconducting magnet fatigue topology optimization method and a related apparatus. The method comprises: determining a main bearing structure on the basis of the overall structure of a superconducting magnet; according to at least two preset loading conditions, for the loading condition of the main bearing structure, obtaining stress amplitudes corresponding to the at least two loading conditions, each loading condition corresponding to a physical field; determining the fatigue life of the main bearing structure on the basis of the stress amplitudes; determining a fatigue topology optimization model of the superconducting magnet on the basis of the fatigue life, the fatigue topology optimization model of the superconducting magnet being related to structural quality and the fatigue life of each unit in the main bearing structure; and determining an optimization unit on the basis of the fatigue topology optimization model of the superconducting magnet.

```
Determine a main bearing structure based on an overall structure of a          S101
superconducting magnet
        ↓
Load conditions to the main bearing structure based on at least two preset      S102
loading conditions, to obtain stress amplitudes corresponding to the at least two
loading conditions, where each loading condition of the at least two loading
conditions respectively corresponds to a physical field
        ↓
Determine fatigue life of the main bearing structure based on the stress amplitudes   S103
        ↓
Determine a fatigue-based topology optimization model of the superconducting     S104
magnet based on the fatigue life, where the fatigue-based topology
optimization model of the superconducting magnet is related to structural mass
and fatigue life of each unit in the main bearing structure
        ↓
Determine an optimization unit based on the fatigue-based topology              S105
optimization model of the superconducting magnet
```

**FIG. 1**

## Description

The present disclosure claims the priority to the Chinese Patent Application No. 202311329622.4, titled "Superconducting Magnet Fatigue Topology Optimization Method and Related Apparatus", filed on October 13, 2023 with the China National Intellectual Property Administration, which is incorporated herein by reference in its entirety.

## FIELD

The present disclosure relates to the field of superconducting magnets, and in particular to a fatigue-based topology optimization method and apparatus for superconducting magnet.

## BACKGROUND

Superconducting magnets have been successfully applied in fields, such as nuclear magnetic resonance, electromagnetic ejection and rail transit, due to their ability to generate strong magnetic fields. However, unlike other static application scenarios, in the rail transit field, within a range of a weight constraint of the superconducting magnets, certain requirements for bearings of the superconducting magnets and for service life of the superconducting magnets exist in dynamic conditions such as impacts and vibrations.

Superconducting magnets have been successfully applied in fields, such as nuclear magnetic resonance, electromagnetic ejection and rail transit, due to their ability to generate strong magnetic fields. However, unlike other static application scenarios, in the rail transit field, within a range of a weight constraint of the superconducting magnets, certain requirements for bearings of the superconducting magnets and for service life of the superconducting magnets exist in dynamic conditions such as impacts and vibrations.

Currently, requirements, including high structural strength, low heat loss in temperature field, strong electromagnetic intensity in electromagnetic field, and light weight, and the like need to be satisfied when designing superconducting magnets for high-temperature superconducting electrodynamic suspension trains. However, a conflict exists in designing for high structural strength and light structural weight. Topology optimization methods may be adopted to perform weight reduction optimization on structural stiffness and static strength without relying on designer's experience. However, in terms of fatigue strength, traditional optimization methods for superconducting magnets fails to manage a coupling relationship between the fatigue strength and multiple physical fields, and also fails to resolve a conflict between the fatigue strength and weight reduction.

## SUMMARY

To address the lack of an optimization method for superconducting magnets in terms of fatigue strength for managing a coupling relationship between the fatigue strength and multiple physical fields and resolving a conflict between the fatigue strength and weight reduction, a fatigue-based topology optimization method and apparatus for superconducting magnet are provided according to the present disclosure.

The fatigue-based topology optimization method for superconducting magnet, includes:

determining a main bearing structure based on an overall structure of a superconducting magnet;

loading conditions to the main bearing structure based on at least two preset loading conditions, to obtain stress amplitudes corresponding to the at least two loading conditions, where each loading condition of the at least two loading conditions respectively corresponds to a physical field;

determining fatigue life of the main bearing structure based on the stress amplitudes;

determining a fatigue-based topology optimization model of the superconducting magnet based on the fatigue life, where the fatigue-based topology optimization model of the superconducting magnet is related to structural mass and fatigue life of each unit in the main bearing structure; and

determining an optimization unit based on the fatigue-based topology optimization model of the superconducting magnet.

In an embodiment, the loading conditions to the main bearing structure based on at least two preset loading conditions, to obtain stress amplitudes corresponding to the at least two loading conditions, includes:

obtaining a peak-to-peak value of electromagnetic force, and loading the peak-to-peak value of the electromagnetic force to a coil mount unit cooperating with a superconducting coil, to obtain a first stress amplitude, where the main bearing structure includes the coil mount unit;

obtaining a peak value of a thermal force, and loading the peak value of the thermal force to a main support unit, to obtain a second stress amplitude, where the main bearing structure includes the main support unit; and

obtaining peak values of positive and negative impact forces, and loading the peak values of the positive and negative impact forces to the overall structure of the superconducting magnet, to obtain a third stress amplitude.

In an embodiment, before the obtaining a peak value of a thermal force, and loading the peak value of the thermal force to a main support unit, to obtain a second stress amplitude, the method further includes:

obtaining a peak-to-peak value of a thermal force under a coupling condition of a temperature field and a structural field;

generating a contour plot based on the peak-to-peak value of the thermal force and the superconducting magnet, where the contour plot includes temperature stresses representing all structures in the superconducting magnet; and

selecting a main support unit satisfying a temperature-stress condition based on the contour plot to serve as a structure bearing the peak value of the thermal force.

In an embodiment, the determining fatigue life of the main bearing structure based on the stress amplitudes, includes:

determining first fatigue life of the coil mount unit corresponding to the first stress amplitude based on a first preset stress-life correspondence;

determining second fatigue life of the main support unit corresponding to the second stress amplitude based on a second preset stress-life correspondence; and

determining third fatigue life of the superconducting magnet corresponding to the third stress amplitude based on a third preset stress-life correspondence.

In an embodiment, the determining a fatigue-based topology optimization model of the superconducting magnet based on the fatigue life, includes:

determining unit inherent fatigue allowable life and an inherent fatigue allowable stress corresponding to the unit inherent fatigue allowable life of each main support unit in the superconducting magnet based on a fourth preset stress-life correspondence;

identifying unit fatigue allowable life based on the unit inherent fatigue allowable life and a preset filtering function; and

establishing a fatigue-based topology optimization model to reduce a mass of the superconducting magnet with the unit fatigue allowable life as a constraint based on the fatigue life of the main bearing structure.

In an embodiment, the establishing a fatigue-based topology optimization model to reduce a mass of the superconducting magnet with the unit fatigue allowable life as a constraint based on the fatigue life of the main bearing structure, includes:
establishing the fatigue-based topology optimization model to reduce the mass of the superconducting magnet with a constraint that a peak stress of a cyclic load corresponding to fatigue life of any structure consisting the superconducting magnet is not greater than a peak stress of a cyclic load corresponding to inherent fatigue allowable life of the structure.
In an embodiment, the determining an optimization unit based on the fatigue-based topology optimization model of the superconducting magnet, includes:
determining a unit with a contribution value for fatigue life satisfying a preset weight reduction condition among at least three units in the superconducting magnet as an optimization unit based on the fatigue-based topology optimization model of the superconducting magnet, where a contribution value for fatigue life of a unit is related to fatigue life of the unit.
The fatigue-based topology optimization apparatus for superconducting magnet, includes:

a main bearing structure determination module, configured to determine a main bearing structure based on an overall structure of a superconducting magnet;

a condition loading module, configured to load conditions to the main bearing structure based on at least two preset loading conditions, to obtain stress amplitudes corresponding to the at least two loading conditions, where each loading condition of the at least two loading conditions respectively corresponds to a physical field;

a fatigue life determination module, configured to determine fatigue life of the main bearing structure based on the stress amplitudes;

a model determination module, configured to determine a fatigue-based topology optimization model of the superconducting magnet based on the fatigue life, where the fatigue-based topology optimization model of the superconducting magnet is related to structural mass and fatigue life of each unit in the main bearing structure; and

an optimization unit determination module, configured to determine an optimization unit based on the fatigue-based topology optimization model of the superconducting magnet.

An electronic device, includes: a memory and a processor,

where the memory stores a processing program; and

the processor is configured to load and execute the processing program stored in the memory, to perform the fatigue-based topology optimization method for superconducting magnet according to any of the above embodiments.

A readable storage medium stores a computer program, where the computer program is called and executed by a processor to perform the fatigue-based topology optimization method for superconducting magnet according to any of the above embodiments.

A fatigue-based topology optimization method and apparatus for superconducting magnet are provided according to embodiments of the present disclosure. The method includes: determining a main bearing structure based on an overall structure of a superconducting magnet; loading conditions to the main bearing structure based on at least two preset loading conditions, to obtain stress amplitudes corresponding to the at least two loading conditions, where each loading condition of the at least two loading conditions respectively corresponds to a physical field; determining fatigue life of the main bearing structure based on the stress amplitudes; determining a fatigue-based topology optimization model of the superconducting magnet based on the fatigue life, where the fatigue-based topology optimization model of the superconducting magnet is related to structural mass and fatigue life of each unit in the main bearing structure; and determining an optimization unit based on the fatigue-based topology optimization model of the superconducting magnet. In the embodiments of the present disclosure, after the main bearing structure of the superconducting magnet is determined, multiple loading conditions are loaded to the main bearing structure to obtain the fatigue life of the main bearing structure, the fatigue-based topology optimization model of the superconducting magnet is determined based on the fatigue life, and the optimization unit is determined based on the fatigue-based topology optimization model, thereby achieving a coupling relationship between fatigue strength and multiple physical fields. By adopting the fatigue-based topology optimization model determined based on the fatigue strength, the corresponding optimization unit can be determined, thereby managing a relationship between the fatigue strength and weight reduction. The coupling relationship between the fatigue strength the multiple physical fields can be managed, and a conflict between the fatigue strength and the weight reduction can be addressed.

## BRIEF DESCRIPTION OF THE DRAWINGS

To clearly describe the technical solutions in the embodiments of the present disclosure, drawings to be used in the description of the embodiments are briefly described hereinafter. Apparently, the drawings described hereinafter show merely the embodiments of the present disclosure, and those skilled in the art may obtain other drawings based on the provided drawings without any creative effort.

FIG. 1 is a flowchart of a fatigue-based topology optimization method for superconducting magnet according to a first embodiment of the present disclosure;

FIG. 2 is a flowchart of a fatigue-based topology optimization method for superconducting magnet according to a second embodiment of the present disclosure;

FIG. 3 is a schematic diagram of electromagnetic force in a fatigue-based topology optimization method for superconducting magnet according to a second embodiment of the present disclosure;

FIG. 4 is a schematic structural diagram of a superconducting magnet in a fatigue-based topology optimization method for superconducting magnet according to a second embodiment of the present disclosure;

FIG. 5 is a flowchart of a fatigue-based topology optimization method for superconducting magnet according to a third embodiment of the present disclosure;

FIG. 6 is a flowchart of a fatigue-based topology optimization method for superconducting magnet according to a fourth embodiment of the present disclosure;

FIG. 7 is a flowchart of a fatigue-based topology optimization method for superconducting magnet according to a fifth embodiment of the present disclosure; and

FIG. 8 is a schematic structural diagram of a fatigue-based topology optimization apparatus for superconducting magnet according to an embodiment of the present disclosure.

## DETAILED DESCRIPTION

The technical solutions in the embodiments of the present disclosure are described clearly and completely hereinafter in conjunction with the drawings in the embodiments of the present disclosure. Apparently, the described embodiments are only some of the embodiments according to the present disclosure, rather than all the embodiments. Any other embodiments obtained by those skilled in the art based on the embodiments of the present disclosure without any creative work fall within the protection scope of the present disclosure.

The technical solutions in the embodiments of the present disclosure are described clearly and completely hereinafter in conjunction with the drawings in the embodiments of the present disclosure. Apparently, the described embodiments are only some of the embodiments according to the present disclosure, rather than all the embodiments. Any other embodiments obtained by those skilled in the art based on the embodiments of the present disclosure without any creative work fall within the protection scope of the present disclosure.

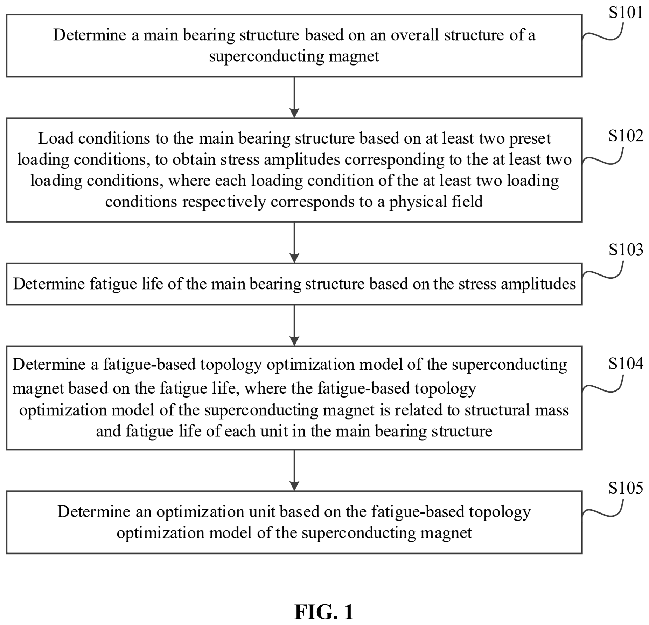

FIG. 1 is referred to, which shows a flowchart of a fatigue-based topology optimization method for superconducting magnet according to a first embodiment of the present disclosure. The method is applied to an electronic device, and the method includes steps S101 to S105.

In step S101, a main bearing structure is determined based on an overall structure of a superconducting magnet.

The superconducting magnet refers to an electromagnet with a coil made of a type-II superconductor at a low temperature, where the type-II superconductor has a high transition temperature and a particularly strong critical magnetic field. By adopting the superconducting magnet, there is neither electrical loss caused by wire resistance nor magnetic loss caused by an iron core.

When topology optimization is determined to be performed for superconducting magnet fatigue, the main bearing structure of the superconducting magnet is to be determined.

In an embodiment, the main bearing structure determined in this step may include multiple structures, and the main bearing structure varies in different loading conditions.

In an embodiment, the superconducting magnet may be applied to a high-temperature superconducting electrodynamic suspension train.

For loading conditions to the main bearing structure based on different loading conditions, detailed description is provided in a subsequent embodiment, and would not be described in detail in this embodiment.

In step S102, conditions are loaded to the main bearing structure based on at least two preset loading conditions, to obtain stress amplitudes corresponding to the at least two loading conditions, where each loading condition of the at least two loading conditions respectively corresponds to a physical field.

Conditions are loaded to the main bearing structure based on multiple preset loading conditions, to obtain stress amplitude corresponding to each loading condition.

Each loading condition of the multiple preset loading conditions respectively corresponds to a physical field, and a relationship between each physical field and fatigue strength is determined based on the multiple preset loading conditions.

In an implementation, the main bearing structure is loaded for multiple times based on each loading condition, to obtain stress amplitudes respectively corresponding to each loading condition each time.

The number of loading times may be a preset number of times, which is not limited in the present disclosure.

The stress amplitude refers to a difference between a maximum normal stress and a maximum negative stress during a load cycle of an object.

This procedure may be described in detail in a subsequent embodiment, which is not described in detail in this embodiment.

In step S103, fatigue life of the main bearing structure is determined based on the stress amplitudes.

The fatigue life characterizes a number of stress cycles that a material undergoes before fatigue failure.

A preset stress-life correspondence (S-N curve table) is provided in the electronic device, and fatigue life corresponding to the stress amplitude is determined based on the preset stress-life correspondence.

A stress-life curve is established by taking fatigue strength of a material standard specimen as an ordinate, and taking a logarithmic value lg N of the fatigue life as an abscissa. The S-N curve table representing a correspondence between several stresses and fatigue life is determined based on the stress-life curve. In the present disclosure, the fatigue life is mainly determined based on the S-N curve table.

Fatigue failure is prone to occur in a structure under long-term cyclic loading. The fatigue life is a vital index to determine a fatigue characteristic of the structure. The fatigue life is determined based on an S-N (stress-life) curve of a material or a part. Combined with a fatigue damage accumulation theory, the fatigue strength is verified, or the fatigue life is calculated.

In an embodiment, the S-N curve table describes a relationship between a peak stress of a cyclic load and the fatigue life, which is most commonly implemented in a form of a power function as follows:

$$\sigma_L^{\beta} L = C \tag{1},$$

where $\beta$ and C are material constants depend on material properties, specimen form, stress ratios and loading modes, L represents the fatigue life, and $\sigma_L$ represents the stress amplitude.

For example, taking a superconducting magnet as a material to be studied, $\beta$ has a value of 7, and C has a value of 20.

The values of these two material constants are not limited in the present disclosure.

In step S104, a fatigue-based topology optimization model of the superconducting magnet is determined based on the fatigue life, where the fatigue-based topology optimization model of the superconducting magnet is related to structural mass and fatigue life of each unit in the main bearing structure.

After fatigue life corresponding to each loading condition is determined, the fatigue-based topology optimization model of the superconducting magnet is established based on the fatigue life.

The procedure of establishing the fatigue-based topology optimization model is described in detail in a subsequent embodiment, which is not described in detail in this embodiment.

In step S105, an optimization unit is determined based on the fatigue-based topology optimization model of the superconducting magnet.

After the fatigue-based topology optimization model of the superconducting magnet is established, a part of the superconducting magnet that is able to be optimized is determined based on the fatigue-based topology optimization model, and the optimization unit is determined.

The optimization unit is a structural unit that does not contribute to the fatigue life of the superconducting magnet.

During the manufacturing procedure, the optimization unit may be removed by milling, which can achieve weight reduction without reducing the fatigue life of the superconducting magnet.

Topology optimization involved in this embodiment refers to a mathematical method for optimizing material distribution within a given area based on given loading conditions, constraints and performance indexes, which is a type of structural optimization.

In the present disclosure, the structural optimization for the superconducting magnet is achieved by establishing the fatigue-based topology optimization model.

The procedure of determining the optimization unit is described in detail in a subsequent embodiment, which is not described in detail in this embodiment.

The fatigue-based topology optimization method for superconducting magnet is provided by this embodiment. The method includes: determining a main bearing structure based on an overall structure of a superconducting magnet; loading conditions to the main bearing structure based on at least two preset loading conditions, to obtain stress amplitudes corresponding to the at least two loading conditions, where each loading condition of the at least two loading conditions respectively corresponds to a physical field; determining fatigue life of the main bearing structure based on the stress amplitudes; determining a fatigue-based topology optimization model of the superconducting magnet based on the fatigue life, where the fatigue-based topology optimization model of the superconducting magnet is related to structural mass and fatigue life of each unit in the main bearing structure; and determining an optimization unit based on the fatigue-based topology optimization model of the superconducting magnet. In this embodiment, after the main bearing structure of the superconducting magnet is determined, multiple loading conditions are loaded to the main bearing structure to obtain the fatigue life of the main bearing structure, the fatigue-based topology optimization model of the superconducting magnet is determined based on the fatigue life, and the optimization unit is determined based on the fatigue-based topology optimization model, thereby achieving a coupling relationship between fatigue strength and multiple physical fields. By adopting the fatigue-based topology optimization model determined based on the fatigue strength, the corresponding optimization unit can be determined, thereby managing a relationship between the fatigue strength and weight reduction. The coupling relationship between the fatigue strength the multiple physical fields can be managed, and a conflict between the fatigue strength and the weight reduction can be addressed.

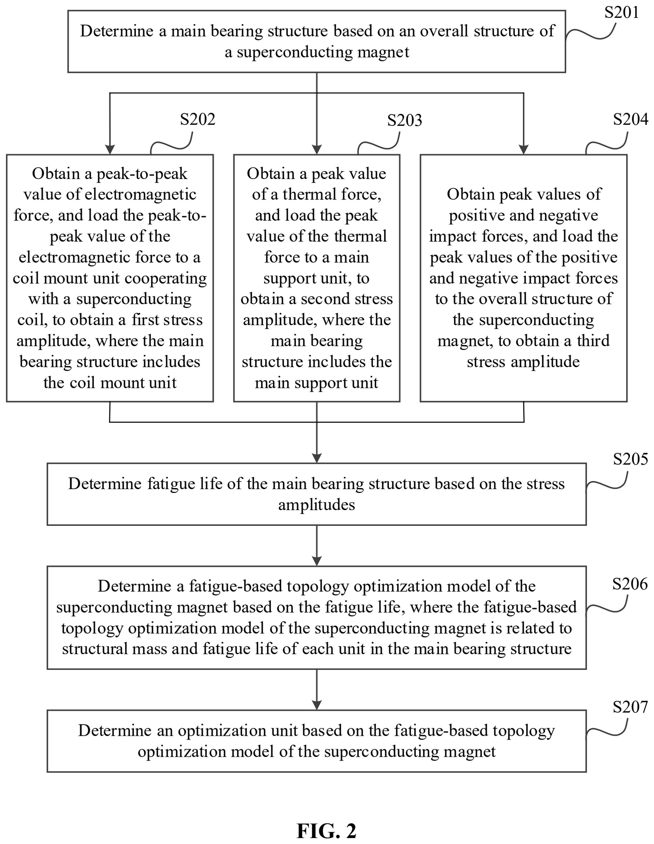

FIG. 2 is referred to, which shows a flowchart of a fatigue-based topology optimization method for superconducting magnet according to a second embodiment of the present disclosure. The method includes steps S201 to S207.

In step S201, a main bearing structure is determined based on an overall structure of a superconducting magnet.

Step S201 is the same as the corresponding step S101 in the first embodiment, and is not repeated herein.

In step S202, a peak-to-peak value of electromagnetic force is obtained, and the peak-to-peak value of the electromagnetic force is loaded to a coil mount unit cooperating with a superconducting coil, to obtain a first stress amplitude, where the main bearing structure includes the coil mount unit.

The loading condition corresponding to the step S202 is a coupling condition of an electromagnetic field and a structural field.

In an embodiment, a time-varying electromagnetic force and a Lorentz force are obtained through electromagnetic field calculation, to obtain the peak-to-peak value of electromagnetic force. The peak-to-peak value of the electromagnetic force includes a maximum value of a positive electromagnetic force and a maximum value of a negative electromagnetic force.

The Lorentz force refers to the force exerted by a moving charge in a magnetic field, that is, the force exerted by the magnetic field on the moving charge.

In the coupling condition of the electromagnetic field and the structural field, the main bearing structure is a coil mount unit cooperating with a superconducting coil.

In an embodiment, the peak-to-peak value of the electromagnetic force is loaded to the coil mount unit, and a stress amplitude of the coil mount unit is determined. Specifically, the maximum value of the negative electromagnetic force is subtracted from the maximum value of the positive electromagnetic force (with their directions considered), to obtain a first stress amplitude.

In an embodiment, the peak-to-peak value of the electromagnetic force is loaded to the coil mount unit based on a preset number of loading times, to determine the fatigue life of the coil mount unit.

The time-varying electromagnetic force is calculated by loading electromagnetic calculation boundary conditions of a superconducting coil and an figure-eight coil (such as movement speed, a magnetomotive force, geometric dimensions of the superconducting coil and the figure-eight coil, and a distance between center lines of the superconducting coil and the figure-eight coils) in modeling and simulation software. A periodic electromagnetic force that varies over time is then calculated.

In the modeling and simulation software, the time-varying electromagnetic force is simulated to generate a traction force, a levitation force, and a guidance force, which are electromagnetic forces generated by mutual attraction or repulsion between magnetic fields of the superconducting magnet, a ground traction coil and the figure-eight coil.

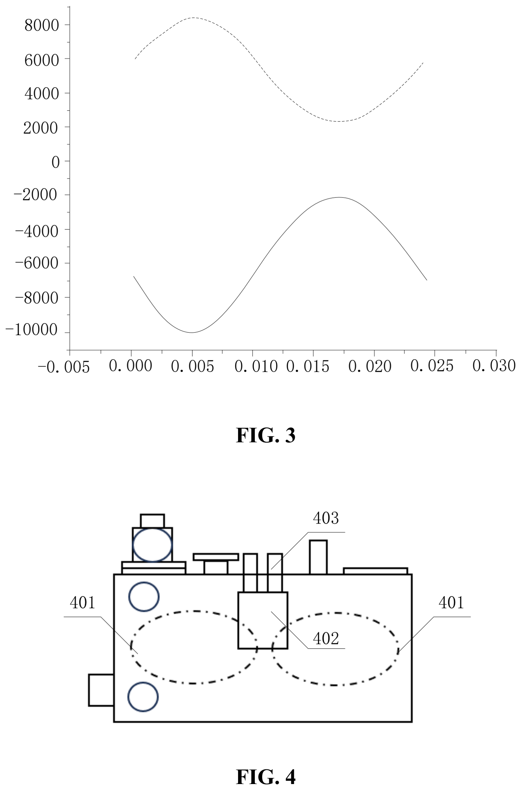

In an embodiment, the modeling and simulation software may employ COMSOL, Maxwell, etc. In the present disclosure, the specific form of the modeling and simulation software is not limited. FIG. 3 is referred to, which shows a schematic diagram of electromagnetic force. In this figure, a time-varying electromagnetic force exerted by a superconducting coil B is shown by a dashed line, and a time-varying electromagnetic force exerted by a superconducting coil C is shown by a solid line. It can be seen from the curve shown in FIG. 2 that the electromagnetic force has a maximum value and a minimum value. The maximum value refers to the maximum value of a positive electromagnetic force, and the minimum value refers to the maximum value of a negative electromagnetic force.

In step S203, a peak value of a thermal force is obtained, and the peak value of the thermal force is loaded to the main support unit, to obtain a second stress amplitude, where the main bearing structure includes the main support unit.

The loading condition corresponding to the step S203 is a coupling condition of a temperature field and a structural field.

Specifically, the coupling condition in this step is thermo-mechanical coupling. The thermo-mechanical coupling procedure is interplay between two physical fields, which are a stress field and a temperature field. That is, temperature influences stress deformation, while stress deformation influences temperature variations.

In an embodiment, the main bearing structure in the coupling condition of the temperature field and the structural field is first determined, and the determined main bearing structure is a main support unit.

The procedure of determining the main bearing structure is described in detail in a subsequent embodiment, and is not described in detail in this embodiment.

In an embodiment, the main support unit is a structure that connects parts of highest and lowest temperatures among structures in the superconducting magnet. Among its parts, the middle part of the main support unit is most easily affected by the temperature field.

After the main bearing structure is determined to be the main support unit, the peak value of the thermal force is loaded to the main support unit.

In an embodiment, the peak value of the thermal force is obtained through conversion using a value of a thermal stress and a loaded area. The value of the thermal stress is determined based on a thermal stress result. The thermal stress result within a temperature variation range from a lowest temperature to a highest temperature in an operating state is obtained through temperature field calculation.

In an embodiment, the peak value of the thermal force is calculated based on thermal stresses respectively corresponding to the lowest temperature and the highest temperature, and the loaded area.

In an embodiment, the peak value of the thermal force is loaded to the main support unit, and a stress amplitude of the main support unit is determined. Specifically, a maximum peak value of a negative thermal force is subtracted from a maximum peak value of a positive thermal force (with their directions considered), to obtain a second stress amplitude.

In an embodiment, the peak value of the thermal force is loaded to the main support unit based on a preset number of loading times, to determine fatigue life of the main support unit.

In step S204, peak values of positive and negative impact forces are obtained, and the peak values of the positive and negative impact forces are loaded to the overall structure of the superconducting magnet, to obtain a third stress amplitude.

The loading condition corresponding to the step S204 is a mechanical boundary condition.

In an embodiment, in the mechanical boundary condition, an atmospheric pressure and the peak values of the positive and negative impact forces obtained from tests are loaded to a main force transmission position.

In an embodiment, the atmospheric pressure is loaded on an outer Dewar surface of the superconducting magnet, and the peak values of the positive and negative impact forces are expressed in a form of acceleration, which is directly loaded to the entire superconducting magnet structure.

The peak values of the positive and negative impact forces are also referred to as a peak-peak value of impact forces, and are used to measure the impact on the magnet caused by acceleration variations due to road surface irregularities.

In an embodiment, the atmospheric pressure and the peak values of the positive and negative impact forces obtained from tests are loaded to the superconducting magnet structure based on a preset number of loading times, to determine the fatigue life of the superconducting magnet structure.

The peak values of the positive and negative impact forces are obtained from tests. The tests are performed in advance. As long as basic data is obtained, the tests do not need to be performed every time.

FIG. 4 is referred to, which shows a schematic structural diagram of a superconducting magnet, which includes two coils 401, a coil mount 402, and a main support unit 403. The two coils are denoted with dashed lines. The coil mount is configured to mount the coil, and the main support unit is configured to connect parts of highest and lowest temperatures among structures in the superconducting magnet. The superconducting magnet may further include other structures, which is not limited in this embodiment.

In an embodiment, the highest temperature refers to a temperature at an end of the main support unit close to a side of a train body, and the highest temperature is the same as a room temperature. The lowest temperature refers to a temperature at an end of the main support unit close to a side of the superconducting coil, and the lowest temperature is the same as a temperature of the superconducting coil.

In an implementation, a loading sequence of the three loading conditions is not limited to the sequence in this embodiment, and the three loading conditions may be loaded in any sequence or may be simultaneously loaded. The loading sequence of the loading conditions is not limited in the present disclosure.

In step S205, fatigue life of the main bearing structure is determined based on the stress amplitudes.

In step S206, a fatigue-based topology optimization model of the superconducting magnet is determined based on the fatigue life, where the fatigue-based topology optimization model of the superconducting magnet is related to structural mass and fatigue life of each unit in the main bearing structure.

In step S207, an optimization unit is determined based on the fatigue-based topology optimization model of the superconducting magnet.

Steps S205 to S207 are the same as the corresponding steps in the first embodiment, and are not repeated herein.

The fatigue-based topology optimization method for superconducting magnet is provided by this embodiment. The method includes: obtaining a peak-to-peak value of electromagnetic force, and loading the peak-to-peak value of the electromagnetic force to a coil mount unit cooperating with a superconducting coil, to obtain a first stress amplitude, where the main bearing structure includes the coil mount unit; obtaining a peak value of a thermal force, and loading the peak value of the thermal force to a main support unit, to obtain a second stress amplitude, where the main bearing structure includes the main support unit; and obtaining peak values of positive and negative impact forces, and loading the peak values of the positive and negative impact forces to the overall structure of the superconducting magnet, to obtain a third stress amplitude. In this embodiment, three loading conditions are provided, namely, a coupling condition of an electromagnetic field and a structural field, a coupling condition of a temperature field and a structural field and a mechanical boundary condition. Stress amplitudes respectively under the three operating conditions are determined, which provides a basis for subsequently determining fatigue life of the main bearing structure and determining a fatigue-based topology optimization model.

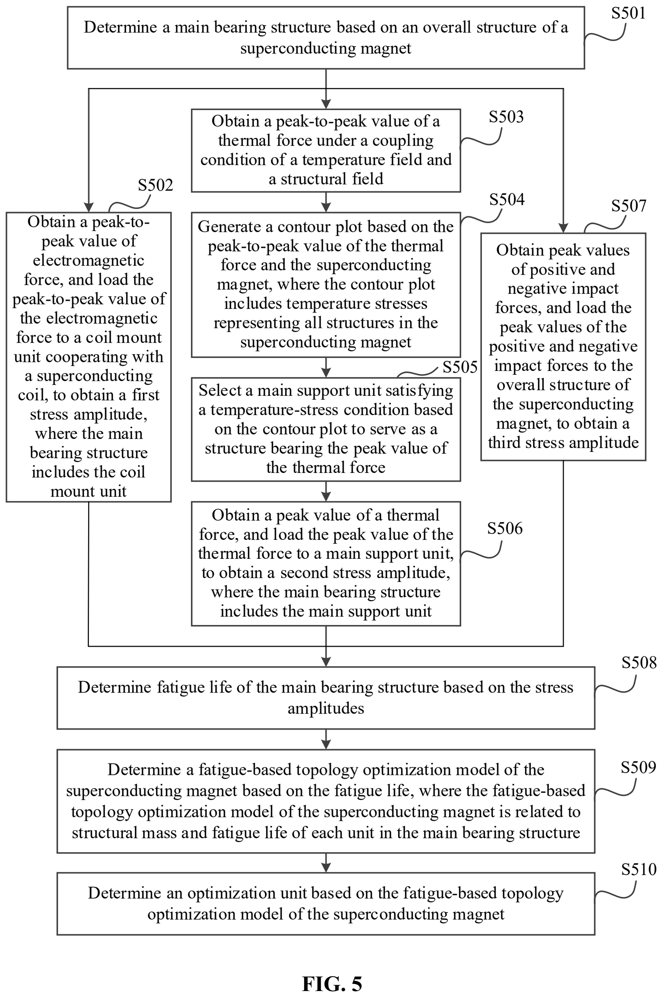

FIG. 5 is referred to, which shows a flowchart of a fatigue-based topology optimization method for superconducting magnet according to a third embodiment of the present disclosure. The method includes steps S501 to S510.

In step S501, a main bearing structure is determined based on an overall structure of a superconducting magnet.

In step S502, a peak-to-peak value of electromagnetic force is obtained, and the peak-to-peak value of the electromagnetic force is loaded to a coil mount unit cooperating with a superconducting coil, to obtain a first stress amplitude, where the main bearing structure includes the coil mount unit.

Steps S501 to S502 are the same as the corresponding steps in the second embodiment, and are not repeated herein.

In step S503, a peak-to-peak value of a thermal force is obtained under a coupling condition of a temperature field and a structural field.

In this embodiment, the procedure of determining the main bearing structure under the coupling condition of the temperature field and the structure field is described.

Thermal stress results within a temperature variation range from the lowest temperature to the highest temperature of all structures in the superconducting magnet in an operating state are obtained through temperature field calculation. The thermal stress results are peak-to-peak values of thermal stress calculation results.

For example, the temperature variation range from the lowest temperature to the highest temperature may be 20 K to 293 K, 35 K to 293 K, and the like.

Among the peak-to-peak values of the thermal stress calculation results, a maximum peak value is calculated from 20 K to 293 K, and a minimum peak value is calculated from 35K to 293K.

The determined peak-to-peak value of the thermal force is obtained based on each structure of the superconducting magnet.

In step S504, a contour plot is generated based on the peak-to-peak value of the thermal force and the superconducting magnet, where the contour plot includes temperature stresses representing all structures in the superconducting magnet.

The peak-peak values of the thermal force for all structures in the superconducting magnet are combined with the structure of the superconducting magnet, to obtain the contour plot.

A temperature stress is calculated based on two peak-to-peak values. Specifically, a maximum peak value of a negative thermal force is subtracted from a maximum peak value of a positive thermal force with their directions considered.

In an embodiment, the contour plot is obtained based on temperature stresses of all structures in the superconducting magnet, and all structures. The contour plot includes the temperature stresses of all structures in the superconducting magnet.

In step S505, a main support unit satisfying a temperature-stress condition is selected based on the contour plot to serve as a structure bearing the peak value of the thermal force.

The temperature-stress condition is that having the largest temperature stress among all structures.

A structure located at a position of the largest temperature stress in the superconducting magnet is selected as a structure bearing the peak value of the thermal force, which is most significantly affected by temperature variations.

In an embodiment, in the contour plot, a structure with the largest temperature stress is selected as the structure bearing the peak value of the thermal force.

In an embodiment, in the superconducting magnet, the main support unit has the largest temperature stress. The main support unit connects a structure having the highest temperature and a structure having the lowest temperature. A middle part of the main support unit is the position of the largest temperature stress.

In a subsequent step, the peak value of the thermal force may be loaded to the middle part of the main support unit, to load the coupling condition of the temperature field and the structural field.

In step S506, a peak value of a thermal force is obtained, and the peak value of the thermal force is loaded to the main support unit, to obtain a second stress amplitude, where the main bearing structure includes the main support unit.

In step S507, peak values of positive and negative impact forces are obtained, and the peak values of the positive and negative impact forces are loaded to the overall structure of the superconducting magnet, to obtain a third stress amplitude.

In step S508, fatigue life of the main bearing structure is determined based on the stress amplitudes.

In step S509, a fatigue-based topology optimization model of the superconducting magnet is determined based on the fatigue life, where the fatigue-based topology optimization model of the superconducting magnet is related to structural mass and fatigue life of each unit in the main bearing structure.

In step S510, an optimization unit is determined based on the fatigue-based topology optimization model of the superconducting magnet.

Steps S508 to S510 are the same as the corresponding steps in the second embodiment, and are not repeated herein.

The fatigue-based topology optimization method for superconducting magnet is provided by this embodiment. The method includes: obtaining a peak-to-peak value of a thermal force under a coupling condition of a temperature field and a structural field; generating a contour plot based on the peak-to-peak value of the thermal force and the superconducting magnet, where the contour plot includes temperature stresses representing all structures in the superconducting magnet; and selecting a main support unit satisfying a temperature-stress condition based on the contour plot to serve as a structure bearing the peak value of the thermal force. In this embodiment, the contour plot is obtained based on the peak-to-peak value of the thermal force for the coupling condition of the temperature field and the structural field and the superconducting magnet, and the main support unit bearing the peak value of the thermal force is selected based on the contour plot. The structure bearing the peak value of the thermal force is selected based on the structure of the superconducting magnet.

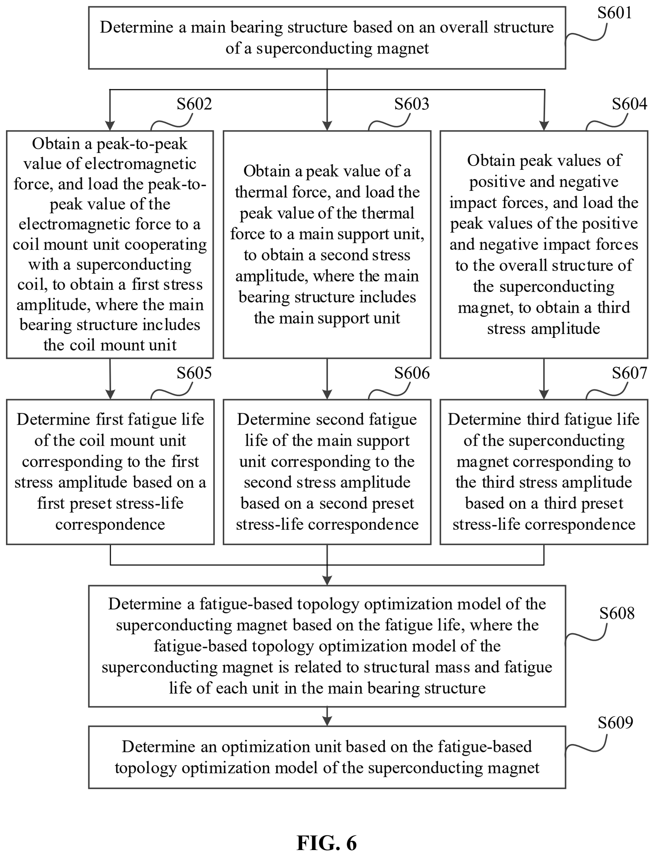

FIG. 6 is referred to, which shows a flowchart of a fatigue-based topology optimization method for superconducting magnet according to a fourth embodiment of the present disclosure. The method includes steps S601 to S609.

In step S601, a main bearing structure is determined based on an overall structure of a superconducting magnet.

In step S602, a peak-to-peak value of electromagnetic force is obtained, and the peak-to-peak value of the electromagnetic force is loaded to a coil mount unit cooperating with a superconducting coil, to obtain a first stress amplitude, where the main bearing structure includes the coil mount unit.

In step S603, a peak value of a thermal force is obtained, and the peak value of the thermal force is loaded to the main support unit, to obtain a second stress amplitude, where the main bearing structure includes the main support unit.

In step S604, peak values of positive and negative impact forces are obtained, and the peak values of the positive and negative impact forces are loaded to the overall structure of the superconducting magnet, to obtain a third stress amplitude.

Steps S601 to S604 are the same as the corresponding steps in the second embodiment, and are not repeated herein.

In step S605, first fatigue life of the coil mount unit corresponding to the first stress amplitude is determined based on a first preset stress-life correspondence.

The first preset stress-life correspondence is set based on a stress-life correspondence of the coil mount.

In an implementation, a relationship between a stress and life of the coil mount is influenced by a structural shape and a material of the coil mount.

After the first stress amplitude of the coil mount and a number of loading times are determined, the first fatigue life of the coil mount is determined based on the first preset stress-life correspondence.

In an implementation, multiple stress tests need to be performed on the superconducting magnet under a coupling condition of an electromagnetic field and a structural field. That is, peak-to-peak values of electromagnetic force are loaded on the coil mount unit for multiple times.

The first fatigue life of the coil mount is obtained through multiple stress tests, which provides a basis for establishing a fatigue-based topology optimization model subsequently.

In an implementation, a nominal stress method may be used to predict fatigue life of a structure in the superconducting magnet.

In an embodiment, the basis for structural failure is a fatigue cumulative damage theory. According to Palmgren Miner (Miner) Rule, fatigue damage may be accumulated linearly, as expressed by the following formula:

$$D = \sum D = \sum_{n=1}^{m} \frac{l_n}{L_n} \tag{2},$$

where D represents a fatigue damage value, $L_n$ represents fatigue life at n-th stress level, $l_n$ represents a number of cycles at n-th stress level, and m is a number of stress levels, where D=1 indicates material failure.

In an embodiment, based on the above formula (1), fatigue damage values of all units in the superconducting magnet under various conditions are calculated, and damage values of the same unit under multiple conditions are summed up, to obtain the fatigue damage value of the unit.

For example, for the coil mount, under the coupling condition of the electromagnetic field and the structural field, and the mechanical boundary condition, the number of tests performed in each condition is divided by corresponding fatigue life obtained from the tests, to obtain the damage value under each condition. The damage values under all conditions are then summed up, to obtain the fatigue damage value of the coil mount.

In an implementation, the fatigue damage value of each unit in the superconducting magnet may be determined based on the above formula (2), to determine the number of stress tests and/or the stress amplitudes that can be applied on the superconducting magnet, to ensure that the fatigue damage value of each unit remains below 1, thereby avoiding material failure.

In step S606, second fatigue life of the main support unit corresponding to the second stress amplitude is determined based on a second preset stress-life correspondence.

The second preset stress-life correspondence is set based on a stress-life correspondence of the main support unit.

In an implementation, a relationship between a stress and life of the main support unit is influenced by a structural shape and a material of the main support unit.

After the second stress amplitude of the main support unit and a number of loading times are determined, the second fatigue life of the main support unit is determined based on the second preset stress-life correspondence.

In an implementation, multiple stress tests need to be performed on the superconducting magnet under a coupling condition of a temperature field and a structural field. That is, peak values of a thermal force are loaded on the main support unit for multiple times.

The second fatigue life of the main support unit is obtained through multiple stress tests, which provides a basis for establishing a fatigue-based topology optimization model subsequently.

In step S607, third fatigue life of the superconducting magnet corresponding to the third stress amplitude is determined based on a third preset stress-life correspondence.

The third preset stress-life correspondence is a curve set based on a stress-life correspondence of the superconducting magnet (including Dewar).

After the third stress amplitude of the superconducting magnet is determined, third fatigue life corresponding to the third stress amplitude is determined based on the third preset stress-life correspondence.

In an implementation, multiple stress tests need to be performed on the superconducting magnet under a mechanical boundary condition. That is, an atmospheric pressure and peak values of positive and negative impact forces are loaded on the superconducting magnet for multiple times.

Accordingly, the third fatigue life of the superconducting magnet in each test is determined, which provides a basis for establishing a fatigue-based topology optimization model subsequently.

In step S608, a fatigue-based topology optimization model of the superconducting magnet is determined based on the fatigue life, where the fatigue-based topology optimization model of the superconducting magnet is related to structural mass and fatigue life of each unit in the main bearing structure.

In step S609, an optimization unit is determined based on the fatigue-based topology optimization model of the superconducting magnet.

Steps S608 to S609 are the same as the corresponding steps in the second embodiment, and are not repeated herein.

The fatigue-based topology optimization method for superconducting magnet is provided by this embodiment. The method includes: determining first fatigue life of the coil mount unit corresponding to the first stress amplitude based on a first preset stress-life correspondence; determining second fatigue life of the main support unit corresponding to the second stress amplitude based on a second preset stress-life correspondence; and determining third fatigue life of the superconducting magnet corresponding to the third stress amplitude based on a third preset stress-life correspondence. In this embodiment, fatigue life of structure respectively corresponding to the first stress amplitude, the second stress amplitude and the third stress amplitude are determined based on multiple preset stress-life curves, which provides a basis for establishing a fatigue-based topology optimization model. In addition, the procedure of determining fatigue life of each structure is easily feasible.

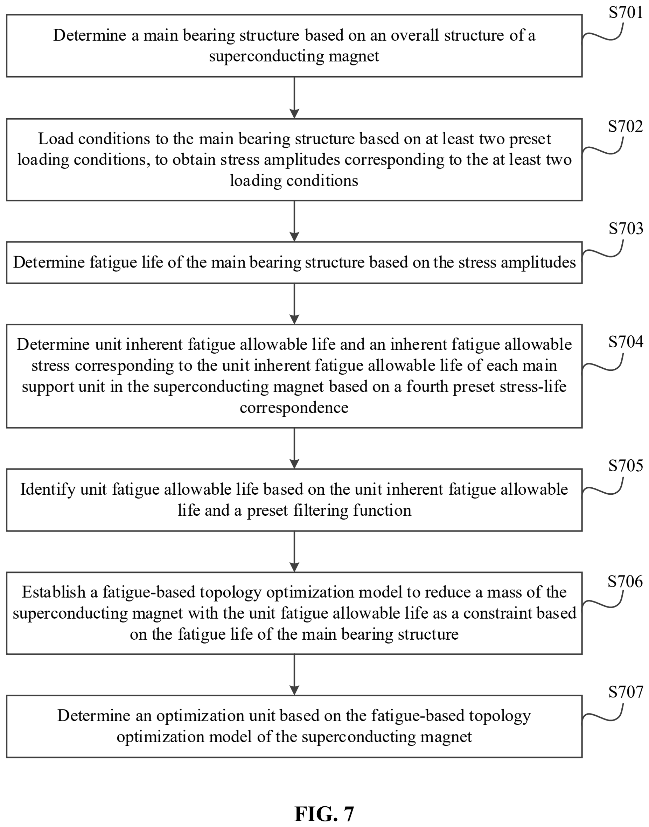

FIG. 7 is referred to, which shows a flowchart of a fatigue-based topology optimization method for superconducting magnet according to a fifth embodiment of the present disclosure. The method includes steps S701 to S707.

In step S701, a main bearing structure is determined based on an overall structure of a superconducting magnet.

In step S702, conditions are loaded to the main bearing structure based on at least two preset loading conditions, to obtain stress amplitudes corresponding to the at least two loading conditions.

In step S703, fatigue life of the main bearing structure is determined based on the stress amplitudes.

Steps S701 to S703 are the same as the corresponding steps in the first embodiment, and are not repeated herein.

In step S704, unit inherent fatigue allowable life and an inherent fatigue allowable stress corresponding to the unit inherent fatigue allowable life of each main support unit in the superconducting magnet are determined based on a fourth preset stress-life correspondence.

The fourth preset stress-life correspondence represents a relationship between an inherent fatigue allowable stress and unit inherent fatigue allowable life of each unit in the superconducting magnet.

In an embodiment, the fourth preset stress-life correspondence is influenced by a structural shape and a material of a corresponding unit.

In an embodiment, an S-N curve table may be used for the preset stress-life correspondence.

In an implementation, the stress amplitude corresponding to 10e7 times is obtained by retrieving the S-N curve table, where 10e7 is the unit inherent fatigue allowable life, and the stress corresponding to 10e7 times of stress amplitude variations is the inherent fatigue allowable stress.

The above procedure of determining the inherent fatigue allowable stress is performed for each main support unit in the superconducting magnet.

In step S705, unit fatigue allowable life is identified based on the unit inherent fatigue allowable life and a preset filtering function.

In a fatigue topology optimization design, the fatigue life of the structure should be longer than fatigue allowable life. The fatigue allowable life is identified through a filtering function based on the unit inherent structural fatigue allowable life.

Based on an iteration condition model (ICM) method, the filtering function is an increasing function within an interval (0, 1].

In this step, corresponding unit fatigue allowable life is identified based on the unit inherent fatigue allowable life of each unit determined in the above step and a preset filtering function.

In an embodiment, in a fatigue life filtering function fL($t_i$), L represents fatigue life of a unit, and $t_i$ represents a unit i in the overall structure of the superconducting magnet.

A relationship between the fatigue life of the unit and the fatigue allowable life is represented by:

$$L_i(t_i) \geq \overline{L_i} \qquad (3),$$

where $L_i(t_i)$ represents fatigue life of unit i in the superconducting magnet, and $\overline{L_i}$ represents fatigue allowable life of unit i.

Accordingly, a relationship between unit fatigue allowable life and unit inherent fatigue allowable life is represented by:

$$\overline{L_i} = \frac{\overline{L_i}^0}{f_L(t_i)} \qquad (4),$$

where $L_i$ represents the fatigue allowable life of unit i, $L_i^0$ represents the inherent fatigue allowable life of unit i, and $f_L(t_i)$ is the filtering function.

In step S706, a fatigue-based topology optimization model is established to reduce a mass of the superconducting magnet with the unit fatigue allowable life as a constraint based on the fatigue life of the main bearing structure.

The fatigue life of each unit in the main bearing structure of the superconducting magnet is determined in the above step, and the fatigue-based topology optimization model is established based on the fatigue life of each unit in the main bearing structure of the superconducting magnet.

In an embodiment, the fatigue-based topology optimization model is established to reduce the mass of the superconducting magnet with the unit fatigue allowable life of each unit as a constraint.

In an embodiment, the method for establishing a fatigue-based topology optimization model specifically includes: establishing the fatigue-based topology optimization model to reduce the mass of the superconducting magnet with a constraint that a peak stress of a cyclic load corresponding to fatigue life of any structure consisting the superconducting magnet is not greater than a peak stress of a cyclic load corresponding to inherent fatigue allowable life of the structure.

The fatigue-based topology optimization model includes a formula for selecting an optimization unit, a formula for calculating the mass of the superconducting magnet, and a formula for representing the relationship between the fatigue life of the unit and the fatigue allowable life. The formulas are as follows:

$$\begin{cases} find\ t \in (t_1, \dots t_N)^T \\ \min\ W = \sum_{i=1}^{N} w_i \\ st.\ L_i \geq \overline{L_i}(i = 1, \dots, N) \end{cases} \qquad (5),$$

where t represents a unit in the superconducting magnet, the superconducting magnet has N units, W represents a total mass of the superconducting magnet, minW represents an objective of minimizing the total mass of the superconducting magnet, $w_i$ represents a mass of a unit i, $L_i$ represents fatigue life of unit i in the superconducting magnet, and $\overline{L_i}$ represents the fatigue allowable life of unit i.

To achieve optimization, inverse life is introduced, which is expressed by:

$$l_i = \frac{1}{L_i}, \overline{l_i}^0 = \frac{1}{\overline{L_i}^0} \tag{6}.$$

A relationship between unit fatigue inverse life and allowable fatigue inverse life is represented by:

$$l_i(t_i) \leq \overline{l_i} \tag{7}.$$

Based on formula (5), formula (6) and formula (7) related to the inverse life, and the above formula (1) representing a relationship between a peak stress of a cyclic load and fatigue life, the fatigue-based topology optimization model is obtained as follows:

$$\begin{cases} find \ t \in (t_1, \dots t_N)^T \\ \min \ W = \sum_{i=1}^{N} w_i \\ st. \ \sigma_{iL}^{\beta}(L_i) \leq f_L(t_i)\sigma_{iL}^{\beta}\overline{L_i}^0 \\ (0 < \overline{t_i} \leq t_i \leq 1, i = 1, \dots, N) \end{cases} \tag{8},$$

where $\sigma_{iL}^{\beta}(L_i)$ represents the peak stress of the cyclic load corresponding to the fatigue life of unit i, the peak stress is the stress amplitude determined in the above step, when a unit is loaded with multiple conditions, the stress amplitudes for multiple conditions are summed up, $\sigma_{iL}^{\beta}\overline{L_i}^0$ represents a peak stress of the cyclic load corresponding to the inherent fatigue allowable life of unit I, when a unit is loaded with multiple conditions, the peak stresses of the cyclic load corresponding to the inherent fatigue allowable life for multiple conditions are summed up.

In step S707, an optimization unit is determined based on the fatigue-based topology optimization model of the superconducting magnet.

Based on the fatigue-based topology optimization model determined in the above step, a contribution value of each unit in the superconducting magnet for the fatigue life is determined through iterative calculation.

In an embodiment, a unit with a contribution value for fatigue life satisfying a preset weight reduction condition among at least three units in the superconducting magnet is determined as an optimization unit based on the fatigue-based topology optimization model of the superconducting magnet.

In an embodiment, the contribution value for fatigue life of each unit is determined to be within an interval of [0, 1].

The contribution value of 1 indicates that the unit has the maximum contribution to fatigue life and holds high importance. The contribution value of 0 indicates that the unit has the minimum contribution to fatigue life and holds low importance.

The superconducting magnet includes elements of multiple units. In this step, the contribution value of each unit in the superconducting magnet for fatigue life is determined, and an optimization unit that can be optimized is determined based on the contribution value.

In an embodiment, a unit with a contribution value for fatigue life of 0 is determined as an optimization unit.

The contribution value of the unit is 0, which means that the unit does not contribute to satisfying a constraint for fatigue life. Therefore, if the unit is milled and removed during the manufacturing procedure, the fatigue life would not reduce while reducing the mass of the superconducting magnet.

The fatigue-based topology optimization method for superconducting magnet is provided by this embodiment. The method includes: determining unit inherent fatigue allowable life and an inherent fatigue allowable stress corresponding to the unit inherent fatigue allowable life of each main support unit in the superconducting magnet based on a fourth preset stress-life correspondence; identifying unit fatigue allowable life based on the unit inherent fatigue allowable life and a preset filtering function; and establishing a fatigue-based topology optimization model to reduce a mass of the superconducting magnet with the unit fatigue allowable life as a constraint based on the fatigue life of the main support unit.

In this embodiment, the unit fatigue allowable life is obtained based on unit inherent fatigue allowable life corresponding to a stress of each unit in a superconducting magnet loaded with various loading conditions and a preset filtering function. The fatigue-based topology optimization model is established to reduce a mass of the superconducting magnet with the unit fatigue allowable life as a constraint based on the fatigue life of the main support unit. An objective of establishing the fatigue-based topology optimization model is achieved, and weight reduction of the superconducting magnet can be achieved while ensuring its fatigue strength performance.

Corresponding to the fatigue-based topology optimization method for superconducting magnet according to the above embodiment of the present disclosure, an apparatus which the fatigue-based topology optimization method for superconducting magnet is loaded to is also provided according to an embodiment of the present disclosure.

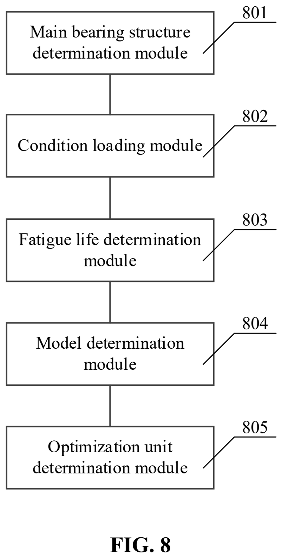

FIG. 8 is referred to, which shows a schematic structural diagram of a fatigue-based topology optimization apparatus for superconducting magnet according to an embodiment of the present disclosure. The apparatus includes: a main bearing structure determination module 801, a condition loading module 802, a fatigue life determination module 803, a model determination module 804 and an optimization unit determination module 805.

The main bearing structure determination module 801 is configured to determine a main bearing structure based on an overall structure of a superconducting magnet.

The condition loading module 802 is configured to load conditions to the main bearing structure based on at least two preset loading conditions, to obtain stress amplitudes corresponding to the at least two loading conditions, where each loading condition of the at least two loading conditions respectively corresponds to a physical field.

The fatigue life determination module 803 is configured to determine fatigue life of the main bearing structure based on the stress amplitudes.

The model determination module 804 is configured to determine a fatigue-based topology optimization model of the superconducting magnet based on the fatigue life, where the fatigue-based topology optimization model of the superconducting magnet is related to structural mass and fatigue life of each unit in the main bearing structure.

The optimization unit determination module 805 is configured to determine an optimization unit based on the fatigue-based topology optimization model of the superconducting magnet.

In an embodiment, the condition loading module includes:

a first determining unit, configured to obtain a peak-to-peak value of electromagnetic force, and load the peak-to-peak value of the electromagnetic force to a coil mount unit cooperating with a superconducting coil, to obtain a first stress amplitude, where the main bearing structure includes the coil mount unit;

a second determining unit, configured to obtain a peak value of a thermal force, and load the peak value of the thermal force to a main support unit, to obtain a second stress amplitude, where the main bearing structure includes the main support unit; and

a third determining unit, configured to obtain peak values of positive and negative impact forces, and load the peak values of the positive and negative impact forces to the overall structure of the superconducting magnet, to obtain a third stress amplitude.

In an embodiment, the condition loading module further includes:

a fourth determining unit, configured to, before obtaining a peak value of a thermal force and loading the peak value of the thermal force to a main support position to obtain a second stress amplitude, obtain a peak-to-peak value of a thermal force under a coupling condition of a temperature field and a structural field;

an obtaining unit, configured to generate a contour plot based on the peak-to-peak value of the thermal force and the superconducting magnet, where the contour plot includes temperature stresses representing all structures in the superconducting magnet; and

a selection unit, configured to select a main support unit satisfying a temperature-stress condition based on the contour plot to serve as a structure bearing the peak value of the thermal force.

In an embodiment, the fatigue life determination module is specifically configured to:

determine first fatigue life of the coil mount unit corresponding to the first stress amplitude based on a first preset stress-life correspondence;

determine second fatigue life of the main support unit corresponding to the second stress amplitude based on a second preset stress-life correspondence; and

determine third fatigue life of the superconducting magnet corresponding to the third stress amplitude based on a third preset stress-life correspondence.

In an embodiment, the model determination module includes:

a determination unit, configured to determine unit inherent fatigue allowable life and an inherent fatigue allowable stress corresponding to the unit inherent fatigue allowable life of each main support unit in the superconducting magnet based on a fourth preset stress-life correspondence;

an identification unit, configured to identify unit fatigue allowable life based on the unit inherent fatigue allowable life and a preset filtering function; and

an establishing unit, configured to establish a fatigue-based topology optimization model to reduce a mass of the superconducting magnet with the unit fatigue allowable life as a constraint based on the fatigue life of the main bearing structure.

In an embodiment, the establishing unit is specifically configured to:
establish the fatigue-based topology optimization model to reduce the mass of the superconducting magnet with a constraint that a peak stress of a cyclic load corresponding to fatigue life of any structure consisting the superconducting magnet is not greater than a peak stress of a cyclic load corresponding to inherent fatigue allowable life of the structure.
In an embodiment, the optimization unit determination module is specifically configured to:
determine a unit with a contribution value for fatigue life satisfying a preset weight reduction condition among at least three units in the superconducting magnet as an optimization unit based on the fatigue-based topology optimization model of the superconducting magnet, where a contribution value for fatigue life of a unit is related to fatigue life of the unit.
For explanation on functions of all structures in the fatigue-based topology optimization apparatus for superconducting magnet, reference may be made to the above method embodiments, which is not repeated herein.
The fatigue-based topology optimization apparatus for superconducting magnet is provided by this embodiment. The apparatus includes: a main bearing structure determination module, configured to determine a main bearing structure based on an overall structure of a superconducting magnet; a condition loading module, configured to load conditions to the main bearing structure based on at least two preset loading conditions, to obtain stress amplitudes corresponding to the at least two loading conditions, where each loading condition of the at least two loading conditions respectively corresponds to a physical field; a fatigue life determination module, configured to determine fatigue life of the main bearing structure based on the stress amplitudes; a model determination module, configured to determine a fatigue-based topology optimization model of the superconducting magnet based on the fatigue life, where the fatigue-based topology optimization model of the superconducting magnet is related to structural mass and fatigue life of each unit in the main bearing structure; and an optimization unit determination module, configured to determine an optimization unit based on the fatigue-based topology optimization model of the superconducting magnet. In this embodiment, after the main bearing structure of the superconducting magnet is determined, multiple loading conditions are loaded to the main bearing structure to obtain the fatigue life of the main bearing structure, the fatigue-based topology optimization model of the superconducting magnet is determined based on the fatigue life, and the optimization unit is determined based on the fatigue-based topology optimization model, thereby achieving a coupling relationship between fatigue strength and multiple physical fields. By adopting the fatigue-based topology optimization model determined based on the fatigue strength, the corresponding optimization unit can be determined, thereby managing a relationship between the fatigue strength and weight reduction. The coupling relationship between the fatigue strength the multiple physical fields can be managed, and a conflict between the fatigue strength and the weight reduction can be addressed.
Corresponding to the fatigue-based topology optimization method for superconducting magnet according to the above embodiments of the present disclosure, an electronic device and a readable storage medium are also provided according to the present disclosure.
The electronic device includes: a memory and a processor.
The memory stores a processing program.
The processor is configured to load and execute the processing program stored in the memory, to perform the fatigue-based topology optimization method for superconducting magnet according to any of the above embodiments.

For the fatigue-based topology optimization method for superconducting magnet performed by the electronic device, reference may be made to the above embodiments.

The readable storage medium stores a computer program. The computer program is called and executed by a processor to perform the fatigue-based topology optimization method for superconducting magnet according to any of the above embodiments.

For the fatigue-based topology optimization method for superconducting magnet performed through the computer program stored in the readable storage medium, reference may be made to the above embodiments.

The embodiments in this specification are described in a progressive manner, and each embodiment focuses on the difference from other embodiments. Same or similar parts in various embodiments may refer to each other. Since the apparatus disclosed in the embodiments corresponds to the method disclosed in the embodiments, the description of the apparatus is brief, and the relevant parts may be referred to the details in the method embodiments.

With the above description of the provided embodiments, those skilled in the art can implement or use the present disclosure. Various modifications to these embodiments are apparent for those skilled in the art. The general principles defined herein may be implemented in other embodiments without departing from the spirit or scope of the present disclosure. Therefore, the present disclosure is not limited to the embodiments illustrated herein, but should comply with the widest scope consistent with the principles and novel features disclosed herein.

**Claims**

1. A fatigue-based topology optimization method for superconducting magnet, comprising:

   determining a main bearing structure based on an overall structure of a superconducting magnet;
   loading conditions to the main bearing structure based on at least two preset loading conditions, to obtain stress amplitudes corresponding to the at least two loading conditions, wherein each loading condition of the at least two loading conditions respectively corresponds to a physical field;
   determining fatigue life of the main bearing structure based on the stress amplitudes;
   determining a fatigue-based topology optimization model of the superconducting magnet based on the fatigue life, wherein the fatigue-based topology optimization model of the superconducting magnet is related to structural mass and fatigue life of each unit in the main bearing structure; and
   determining an optimization unit based on the fatigue-based topology optimization model of the superconducting magnet.

2. The method according to claim 1, wherein the loading conditions to the main bearing structure based on at least two preset loading conditions, to obtain stress amplitudes corresponding to the at least two loading conditions, comprises:

   obtaining a peak-to-peak value of electromagnetic force, and loading the peak-to-peak value of the electromagnetic force to a coil mount unit cooperating with a superconducting coil, to obtain a first stress amplitude, wherein the main bearing structure comprises the coil mount unit;
   obtaining a peak value of a thermal force, and loading the peak value of the thermal force to a main support unit, to obtain a second stress amplitude, wherein the main bearing structure comprises the main support unit; and
   obtaining peak values of positive and negative impact forces, and loading the peak values of the positive and negative impact forces to the overall structure of the superconducting magnet, to obtain a third stress amplitude.

3. The method according to claim 2, wherein before the obtaining a peak value of a thermal force, and loading the peak value of the thermal force to a main support unit, to obtain a second stress amplitude, the method further comprises:

   obtaining a peak-to-peak value of a thermal force under a coupling condition of a temperature field and a structural field;
   generating a contour plot based on the peak-to-peak value of the thermal force and the superconducting magnet, wherein the contour plot comprises temperature stresses representing all structures in the superconducting magnet; and
   selecting a main support unit satisfying a temperature-stress condition based on the contour plot to serve as a structure bearing the peak value of the thermal force.

4. The method according to claim 2, wherein the determining fatigue life of the main bearing structure based on the stress amplitudes, comprises:

determining first fatigue life of the coil mount unit corresponding to the first stress amplitude based on a first preset stress-life correspondence;

determining second fatigue life of the main support unit corresponding to the second stress amplitude based on a second preset stress-life correspondence; and

determining third fatigue life of the superconducting magnet corresponding to the third stress amplitude based on a third preset stress-life correspondence.

5. The method according to claim 1, wherein the determining a fatigue-based topology optimization model of the superconducting magnet based on the fatigue life, comprises:

determining unit inherent fatigue allowable life and an inherent fatigue allowable stress corresponding to the unit inherent fatigue allowable life of each main support unit in the superconducting magnet based on a fourth preset stress-life correspondence;

identifying unit fatigue allowable life based on the unit inherent fatigue allowable life and a preset filtering function; and

establishing a fatigue-based topology optimization model to reduce a mass of the superconducting magnet with the unit fatigue allowable life as a constraint based on the fatigue life of the main bearing structure.

6. The method according to claim 5, wherein the establishing a fatigue-based topology optimization model to reduce a mass of the superconducting magnet with the unit fatigue allowable life as a constraint based on the fatigue life of the main bearing structure, comprises:

establishing the fatigue-based topology optimization model to reduce the mass of the superconducting magnet with a constraint that a peak stress of a cyclic load corresponding to fatigue life of any structure consisting the superconducting magnet is not greater than a peak stress of a cyclic load corresponding to inherent fatigue allowable life of the structure.

7. The method according to claim 6, wherein the determining an optimization unit based on the fatigue-based topology optimization model of the superconducting magnet, comprises:

determining a unit with a contribution value for fatigue life satisfying a preset weight reduction condition among at least three units in the superconducting magnet as an optimization unit based on the fatigue-based topology optimization model of the superconducting magnet, wherein a contribution value for fatigue life of a unit is related to fatigue life of the unit.

8. A fatigue-based topology optimization apparatus for superconducting magnet, comprising:

a main bearing structure determination module, configured to determine a main bearing structure based on an overall structure of a superconducting magnet;

a condition loading module, configured to load conditions to the main bearing structure based on at least two preset loading conditions, to obtain stress amplitudes corresponding to the at least two loading conditions, wherein each loading condition of the at least two loading conditions respectively corresponds to a physical field;

a fatigue life determination module, configured to determine fatigue life of the main bearing structure based on the stress amplitudes;

a model determination module, configured to determine a fatigue-based topology optimization model of the superconducting magnet based on the fatigue life, wherein the fatigue-based topology optimization model of the superconducting magnet is related to structural mass and fatigue life of each unit in the main bearing structure; and

an optimization unit determination module, configured to determine an optimization unit based on the fatigue-based topology optimization model of the superconducting magnet.

9. An electronic device, comprising: a memory and a processor,

wherein the memory stores a processing program; and

the processor is configured to load and execute the processing program stored in the memory, to perform the fatigue-based topology optimization method for superconducting magnet according to any of claims 1 to 7.

10. A readable storage medium, storing a computer program, wherein the computer program is called and executed by a processor to perform the fatigue-based topology optimization method for superconducting magnet according to any of claims 1 to 7.

| Determine a main bearing structure based on an overall structure of a superconducting magnet | S101 |

↓

| Load conditions to the main bearing structure based on at least two preset loading conditions, to obtain stress amplitudes corresponding to the at least two loading conditions, where each loading condition of the at least two loading conditions respectively corresponds to a physical field | S102 |

↓

| Determine fatigue life of the main bearing structure based on the stress amplitudes | S103 |

↓

| Determine a fatigue-based topology optimization model of the superconducting magnet based on the fatigue life, where the fatigue-based topology optimization model of the superconducting magnet is related to structural mass and fatigue life of each unit in the main bearing structure | S104 |

↓

| Determine an optimization unit based on the fatigue-based topology optimization model of the superconducting magnet | S105 |

**FIG. 1**

Determine a main bearing structure based on an overall structure of a superconducting magnet — S201

Obtain a peak-to-peak value of electromagnetic force, and load the peak-to-peak value of the electromagnetic force to a coil mount unit cooperating with a superconducting coil, to obtain a first stress amplitude, where the main bearing structure includes the coil mount unit — S202

Obtain a peak value of a thermal force, and load the peak value of the thermal force to a main support unit, to obtain a second stress amplitude, where the main bearing structure includes the main support unit — S203

Obtain peak values of positive and negative impact forces, and load the peak values of the positive and negative impact forces to the overall structure of the superconducting magnet, to obtain a third stress amplitude — S204

Determine fatigue life of the main bearing structure based on the stress amplitudes — S205

Determine a fatigue-based topology optimization model of the superconducting magnet based on the fatigue life, where the fatigue-based topology optimization model of the superconducting magnet is related to structural mass and fatigue life of each unit in the main bearing structure — S206

Determine an optimization unit based on the fatigue-based topology optimization model of the superconducting magnet — S207

**FIG. 2**

**FIG. 3**

**FIG. 4**

Determine a main bearing structure based on an overall structure of a superconducting magnet — S501

Obtain a peak-to-peak value of a thermal force under a coupling condition of a temperature field and a structural field — S503

Obtain a peak-to-peak value of electromagnetic force, and load the peak-to-peak value of the electromagnetic force to a coil mount unit cooperating with a superconducting coil, to obtain a first stress amplitude, where the main bearing structure includes the coil mount unit — S502

Generate a contour plot based on the peak-to-peak value of the thermal force and the superconducting magnet, where the contour plot includes temperature stresses representing all structures in the superconducting magnet — S504

Obtain peak values of positive and negative impact forces, and load the peak values of the positive and negative impact forces to the overall structure of the superconducting magnet, to obtain a third stress amplitude — S507

Select a main support unit satisfying a temperature-stress condition based on the contour plot to serve as a structure bearing the peak value of the thermal force — S505

Obtain a peak value of a thermal force, and load the peak value of the thermal force to a main support unit, to obtain a second stress amplitude, where the main bearing structure includes the main support unit — S506

Determine fatigue life of the main bearing structure based on the stress amplitudes — S508

Determine a fatigue-based topology optimization model of the superconducting magnet based on the fatigue life, where the fatigue-based topology optimization model of the superconducting magnet is related to structural mass and fatigue life of each unit in the main bearing structure — S509

Determine an optimization unit based on the fatigue-based topology optimization model of the superconducting magnet — S510

**FIG. 5**

Determine a main bearing structure based on an overall structure of a superconducting magnet — S601

Obtain a peak-to-peak value of electromagnetic force, and load the peak-to-peak value of the electromagnetic force to a coil mount unit cooperating with a superconducting coil, to obtain a first stress amplitude, where the main bearing structure includes the coil mount unit — S602

Obtain a peak value of a thermal force, and load the peak value of the thermal force to a main support unit, to obtain a second stress amplitude, where the main bearing structure includes the main support unit — S603

Obtain peak values of positive and negative impact forces, and load the peak values of the positive and negative impact forces to the overall structure of the superconducting magnet, to obtain a third stress amplitude — S604

Determine first fatigue life of the coil mount unit corresponding to the first stress amplitude based on a first preset stress-life correspondence — S605

Determine second fatigue life of the main support unit corresponding to the second stress amplitude based on a second preset stress-life correspondence — S606

Determine third fatigue life of the superconducting magnet corresponding to the third stress amplitude based on a third preset stress-life correspondence — S607

Determine a fatigue-based topology optimization model of the superconducting magnet based on the fatigue life, where the fatigue-based topology optimization model of the superconducting magnet is related to structural mass and fatigue life of each unit in the main bearing structure — S608

Determine an optimization unit based on the fatigue-based topology optimization model of the superconducting magnet — S609

**FIG. 6**

Determine a main bearing structure based on an overall structure of a superconducting magnet ⟩ S701

Load conditions to the main bearing structure based on at least two preset loading conditions, to obtain stress amplitudes corresponding to the at least two loading conditions ⟩ S702

Determine fatigue life of the main bearing structure based on the stress amplitudes ⟩ S703

Determine unit inherent fatigue allowable life and an inherent fatigue allowable stress corresponding to the unit inherent fatigue allowable life of each main support unit in the superconducting magnet based on a fourth preset stress-life correspondence ⟩ S704

Identify unit fatigue allowable life based on the unit inherent fatigue allowable life and a preset filtering function ⟩ S705

Establish a fatigue-based topology optimization model to reduce a mass of the superconducting magnet with the unit fatigue allowable life as a constraint based on the fatigue life of the main bearing structure ⟩ S706

Determine an optimization unit based on the fatigue-based topology optimization model of the superconducting magnet ⟩ S707

**FIG. 7**

Main bearing structure
determination module — 801

Condition loading module — 802

Fatigue life determination
module — 803

Model determination
module — 804

Optimization unit
determination module — 805

**FIG. 8**

## INTERNATIONAL SEARCH REPORT

| International application No. |
|---|
| **PCT/CN2024/095692** |

**A. CLASSIFICATION OF SUBJECT MATTER**

G06F 30/20(2020.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 超导, 磁体, 应力, 工况, 情况, 疲劳, 寿命, 时间, 拓扑, 优化, 质量, 时长, 损坏, 电磁, super conducting, magnet, stress, condition, situation, fatigue, life, time, topology, optimization, quality, duration, damage

**C. DOCUMENTS CONSIDERED TO BE RELEVANT**

| Category* | Citation of document, with indication, where appropriate, of the relevant passages | Relevant to claim No. |
|---|---|---|
| PX | CN 117272675 A (CRRC CHANGCHUN RAILWAY VEHICLES CO., LTD.) 22 December 2023 (2023-12-22)<br>claims 1-10 | 1-10 |
| A | CN 113806858 A (CRRC CHANGCHUN RAILWAY VEHICLES CO., LTD.) 17 December 2021 (2021-12-17)<br>description, paragraphs [0045]-[0051] | 1-10 |
| A | US 2014156229 A1 (CATERPILLAR INC.) 05 June 2014 (2014-06-05)<br>entire document | 1-10 |
| A | CN 116050176 A (HUAZHONG UNIVERSITY OF SCIENCE AND TECHNOLOGY) 02 May 2023 (2023-05-02)<br>entire document | 1-10 |
| A | CN 111950094 A (YANSHAN UNIVERSITY) 17 November 2020 (2020-11-17)<br>entire document | 1-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 August 2024** | **22 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 708 111 A1**

**INTERNATIONAL SEARCH REPORT**

| International application No. |
| --- |
| **PCT/CN2024/095692** |

**C.    DOCUMENTS CONSIDERED TO BE RELEVANT**

| Category* | Citation of document, with indication, where appropriate, of the relevant passages | Relevant to claim No. |
| --- | --- | --- |
| A | 曹志康 (CAO, Zhikang). "微纹理表面改性对液膜密封空化特性的影响研究 (Effect of Micro Textured Surface Modification on Cavitation Characteristics of Liquid Film Seal)" 硕士学位论文 (Master's Thesis), 15 February 2023 (2023-02-15), entire document | 1-10 |

Form PCT/ISA/210 (second sheet) (July 2022)

**INTERNATIONAL SEARCH REPORT**
Information on patent family members

International application No.

**PCT/CN2024/095692**

| Patent document cited in search report | | | Publication date (day/month/year) | Patent family member(s) | Publication date (day/month/year) |
|---|---|---|---|---|---|
| CN | 117272675 | A | 22 December 2023 | None | |
| CN | 113806858 | A | 17 December 2021 | None | |
| US | 2014156229 | A1 | 05 June 2014 | None | |
| CN | 116050176 | A | 02 May 2023 | None | |
| CN | 111950094 | A | 17 November 2020 | None | |

Form PCT/ISA/210 (patent family annex) (July 2022)

**REFERENCES CITED IN THE DESCRIPTION**

**Patent documents cited in the description**

- CN 202311329622